Europäisches Patentamt

European Patent Office

Office européen des brevets

(19)

(11) **EP 0 702 897 B1**

(12) **EUROPEAN PATENT SPECIFICATION**

(45) Date of publication and mention
of the grant of the patent:
**02.04.2003 Bulletin 2003/14**

(21) Application number: **95115072.1**

(22) Date of filing: **25.09.1995**

(51) Int Cl.⁷: **A01N 63/00**
// (A01N63/00, 63:00, 57:20,
57:14, 57:12, 55:04, 47:38,
47:30)

(54) **Method for enhancing the efficacy of agricultural chemicals, adjuvant composition for agricultural chemicals and agricultural chemical composition**

Verfahren zur Verbesserung der Wirksamkeit landwirtschaftlicher Chemikalien,
Hilfsmittelzusammensetzung für landwirtschaftlicher Chemikalien und chemische
Zusammensetzungen für die Landwirtschaft

Procédé pour améliorer l'efficacité de produits chimiques agricoles, composition d'adjuvants pour des
produits chimiques agricoles et composition de produits chimiques agricoles

(84) Designated Contracting States:
**DE FR GB**

(30) Priority: **26.09.1994 JP 23009494**

(43) Date of publication of application:
**27.03.1996 Bulletin 1996/13**

(73) Proprietor: **Kao Corporation
Tokyo 103-8210 (JP)**

(72) Inventors:
• **Suzuki, Tadayuki
Wakayama-shi, Wakayama (JP)**
• **Hasebe, Keiko
Wakayama-shi, Wakayama (JP)**
• **Kamei, Masatoshi
Wakayama-shi, Wakayama (JP)**
• **Hioki, Yuichi
Wakayama-shi, Wakayama (JP)**

(74) Representative:
**Hansen, Bernd, Dr. Dipl.-Chem. et al
Hoffmann Eitle,
Patent- und Rechtsanwälte,
Arabellastrasse 4
81925 München (DE)**

(56) References cited:
**EP-A- 0 272 002          EP-A- 0 515 070
EP-A- 0 636 740          WO-A-94/13784**

• **BULLETIN OF THE KOREAN CHEMICAL
SOCIETY , vol. 15, no. 9, 1994 SEOUL, KR;, pages
719-724, DW.KIM & T.S.KIM 'Purification of
Cellulase from Trichoderma viride and
Properties of Its Component Enzymes'**
• **EUROPEAN JOURNAL OF BIOCHEMISTRY, vol.
146, no. 2, January 1985 BERLIN, DE;, pages
301-308, G.BELDMAN ET AL. 'The cellulase of
Trichoderma viride'**

**Description**

Background of the Invention

Field of the Invention

The present invention relates to a method for enhancing the efficacy of an agricultural chemical with an adjuvant composition for agricultural chemicals and an agricultural chemical composition.

Description of the Related Art

Agricultural chemicals including insecticides, fungicides (or bactericides), herbicides, miticides (or acaricides) and plant growth regulators have been used in the forms of, for example, emulsions, wettable powders, granules, dusts and flowables. In the properties of these agricultural chemical preparations, various attempts have been made to achieve the maximum efficacy of the agricultural chemical. However, it has been difficult to enhance the efficacies of agricultural chemicals through adjustments in formulations. It is further difficult to develop novel agricultural chemicals. Therefore, further enhancement of the efficacies of existing agricultural chemicals would highly contribute to the industry.

As substances capable of enhancing the efficacies of agricultural chemicals, surfactants comprising various nitrogen-containing compounds such as quaternary ammonium salts, betaines and amine oxides have been known. It is known that quaternized or further polyoxyethylenated long-chain amines, among the above-mentioned compounds, are effective for this purpose.

On the other hand, there have been proposed the use of an esterase such as lipase or a polysaccharase such as cellulase as an ingredient of a composition of a herbicide, insecticide, miticide or the like [refer to European Patent Publication-A No. 184288 (published on June 11, 1986)] or the use of such an enzyme in combination with an agricultural chemical to improve the activity of the agricultural chemical [refer to European Patent Publication-A Nos. 272002 (published on June 22, 1988) and 515070 (published on Nov. 25, 1992), and U.S. Patent No. 4762547 (published on Aug. 9, 1988, Assignee: Kao Corp.).

Such a substance having the effect of enhancing the activities of agricultural chemicals is known as an adjuvant. However, the effects of the above-described surfactants comprising the nitrogen-containing compound and enzymes capable of enhancing the efficacies of agricultural chemicals are not always satisfactory.

WO 94/13784 relates to the use of an anti-fungal composition comprising the synergistic combination of a fungal cell wall degrading enzyme selected from chitinolytic enzymes, glucanolytic enzymes and cellulases and non-enzymatic fungicides selected from sterol synthesis inhibiting fungicides and thiol group inactivating fungicides.

EP 0 636 740 A1 discloses a cellulase preparation which can improve the colour and hand of cellulosic fibres while suppressing a lowering in the strength of the fibres. The cellulase can absorb crystalline cellulose and has an avicelase activity to CMCase activity ratio of 0.1 or above.

Disclosure of the Invention

Summary of the Invention

The present inventors have made investigations for the purpose of finding a compound which can enhance the efficacies of agricultural chemicals. As a result of the investigations, they have found that a cellulase having a particular characteristic can enhance the efficacies of various agricultural chemicals, if being combined with a non-ionic or cationic surfactant. The present invention has been accomplished on the basis of this finding.

The present invention thus provides the use of an adjuvant composition comprising:

a cellulase having an avicelase activity and a CMCase activity and a unit ratio of the acivelase activity to the CMCase activity of at least 0.15 and
a non-ionic surfactant or a cationic surfactant as an enhancer for an agricultural chemical.

Further an agricultural chemical composition is provided which comprises:

an agricultural chemical,
a cellulase having an avicelase activity and a CMCase activity and a unit ratio of the avicelase activity to the CMCase activity of at least 0.15 and
a non-ionic surfactant or a cationic surfactant.

The present invention also involves a method for enhancing the efficacy of an agricultural chemical which comprises applying a cellulase together with an agricultural chemical and a non-ionic or cationic surfactant to a locus which would benefit from such treatment, wherein the cellulase has an avicelase activity and a CMCase activity, and the unit ratio of the avicelase activity to the CMCase activity is at least 0.15.

The term "agricultural chemical" used in this description refers to a compound used in a conventional agricultural chemical composition or agricultural chemical preparation as an active ingredient, for example, a fungicide (or a bactericide), an insecticide, a miticide (or an acaricide), a herbicide or a plant growth regulator.

The method of the present invention is useful when the agricultural chemical is a fungicide, an insecticide, a miticide, a herbicide or a plant growth regulator, is more useful when the agricultural chemical is a herbicide, is particularly useful when the agricultural chemical is an organophosphorus herbicide, and is most useful when the agricultural chemical is glyphosate.

Examples of the locus or area to be treated include a farm, a plantation, a fruit garden, an orchard, a flower garden, a lawn, a wood and a forest. Examples of the locus or area to be treated also include plants, field crops such as cereals, vegetables and fruits, trees, fruit trees, grasses, weeds, seeds, and, at the same time, fungi, bacteria, insects, mites and acarids.

The treatment is generally conducted with a mixture comprising the cellulase, the surfactant, the agricultural chemical and an aqueous medium, and, in such a case, the amount of the cellulase in the mixture is preferably such that the total of the avicelase activity and the CMCase activity per gram of the mixture is 0.01 to 10 units.

When the method of the present invention is conducted, it is preferable to use also an enzyme other than the cellulase.

According to the present invention it is also possible to apply the cellulase to a locus which would benefit from such treatment prior to the application of the agricultural chemical.

The treatment is generally conducted with a mixture comprising the cellulase the surfactant, and an aqueous medium, and, in such a case, the amount of the cellulase in the mixture is preferably such that the total of the avicelase activity and the CMCase activity per gram of the mixture is 0.01 to 10 units.

If an enzyme other than the celulase is used in the adjuvant composition, the ratio of the enzyme other than the cellulase to the cellulase is preferably 0.01 to 10 in terms of protein determined by Lowry's method [0. H. Lowry, et. al., J. Biol. Chem., Vol.193, p.265 (1951)].

According to the present invention preferably an adjuvant composition for agricultural chemicals is used which comprises a cellulase having an avicelase activity and a CMCase activity and a unit ratio of the avicelase activity to the CMCase activity of at least 0.15 and a nonionic or cationic surfactant, wherein the amount of the cellulase and surfactant are such that when the composition is diluted to a proper concentration for use with an aqueous medium, the total of the avicelase activity and the CMCase activity per gram of the diluted liquid will be 0.01 to 10 units and the amount of the surfactant will be 0.005 to 5% by weight.

In addition, the present invention relates to an agricultural chemical composition which comprises a cellulase having an avicelase activity and a CMCase activity and a unit ratio of the avicelase activity to the CMCase activity of at least 0.15, a non-ionic or cationic surfactant and an agricultural chemical as the main ingredient, wherein the amount of the cellulase is such that when the composition is diluted to a proper concentration of the agricultural chemical for use with an aqueous medium, the concentration of the cellulase in the dilulted liquid will be sufficient to enhance the efficacy of the agricultural chemical, and the amount of the surfactant is such that when the composition is diluted to a proper concentration of the agricultural chemical for use with an aqueous medium, the concentration of the surfactant in the dilulted liquid will be 0.005 to 5% by weight.

Further scope and applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

Detailed Description of the Invention

Cellulase

A cellulase is an enzyme that hydrolyzes cellulose. It is known that there are various cellulases whose substrate specificities are different from one another, and a mixture of many cellulases whose substrate specificities are different from one another is also known. Cellulases hydrolyze natural cellulose, cellodextrin, cellotriose, cellobiose, avicel, etc. depending on the kind of them. Cellulases are usually produced from plant-humifying fungi and Aspergillus niger.

The cellulase used in the present invention has an avicelase activity and a CMCase activity and a unit ratio of the avicelase activity to the CMCase activity of at least 0.15, preferably in the range of 0.15 to 1.0. The enzyme having an avicelase activity has a potent effect of hydrolyzing avicel (i.e., microcrystalline cellulose powder). Namely, such an enzyme acts as an "exo-" enzyme to hydrolyze β-1,4-glucoside bonds of the cellulose successively from the non-reducing end thereof to form cellobiose. The "unit ratio" which is a characteristic feature of the cellulase used in the present invention is calculated from the avicelase activity (unit) and CMCase activity (unit) determined by the methods which will be described below. More specifically, the unit ratio (the unit of avicelase activity when that of CMCase activity is taken as 1) is obtained by determining both activities by the methods which will be described below using the same enzyme, calculating the avicelase activity and the CMCase activity per unit amount (for example, 1 g) of the enzyme, and dividing the avicelase activity per unit amount of the enzyme by the CMCase activity per unit amount of the enzyme.

The method for determining the avicelase activity in the present invention is as described below. Method for determining avicelase activity

A substrate ("FUNACEL SF"; a microcrystalline cellulose produced by Funakoshi Co., Ltd.) in an amount of 1 w/v % at the final concentration and, subsequently, an enzyme solution (solvent: 1 w/w % aqueous NaCl solution) containing a suitable amount of the enzyme are added to a 0.1 M acetic acid /potassium acetate buffer solution of pH 5.0. The resultant mixture is shaken at 25°C for 20 minutes to react the enzyme on the substrate. Then the mixture is centrifuged (3,000 rpm for 20 minutes) to precipitate the microcrystalline cellulose and separate the supernatant. The reducing sugar in the supernatant is determined by colorimetry with dinitrosalicylic acid by using a glucose solution (solvent: 0.1 M acetic acid / potassium acetate buffer solution of pH 5.0) as the colorimetric standard.

The titer of the enzyme which produces 1 μ mol of a reducing sugar (calculated as glucose) per minute of reaction time is taken as one unit.

The CMCase activity is determined as described below in the present invention. Method for determining CMCase activity

A substrate (sodium carboxymethylcellulose, special grade; a product of Wako Pure Chemical Industries, Ltd.) in an amount of 1 w/v % at the final concentration and then an enzyme solution (solvent: 1 w/w % aqueous NaCl solution) containing a suitable amount of the enzyme are added to a 0.1 M acetic acid / potassium acetate buffer solution of pH 5.0. The resultant mixture is shaken at 25°C for 20 minutes to react the enzyme on the substrate. The reducing sugar in the mixture is determined by colorimetry with dinitrosalicylic acid by using a glucose solution (solvent: 0.1 M acetic acid / potassium acetate buffer solution of pH 5.0) as the colorimetric standard.

The titer of the enzyme which produces 1 μ mol of a reducing sugar (calculated as glucose) per minute of reaction time is taken as one unit.

In the present invention, the combination of the avicelase activity with the CMCase activity is occasionally referred to as "cellulase activity".

Enzymes other than the specified cellulases

In the present invention, the above-specified cellulases are usable also in combination with other enzymes. The enzymes usable in combination with the specified cellulases are not particularly limited so far as they are capable of decomposing the protecting or supporting component of a target living organism. Such an enzyme is preferably a hydrolase such as glycolytic enzymes, proteases and lipolytic enzymes. Specific examples of them include hemicellulase, amylase, pectinase, lytic enzymes (such as lysozyme and chitinase), dextranase, inulase, glucosidase, galactosidase, glucuronidase, glucanase, renin, trypsin, phytin, papain, collagenase and esterases (such as lipase, cutinase, lipoprotein lipase, phospholipase and ergosterol esterase). Among them, one or a mixture of the esterases is preferred, and among the esterases, lipase and cutinase are particularly preferred.

Such an enzyme is used so far as it does not impair the effect of the cellulase which is the essential ingredient of the present invention. Usually, the enzymes other than the cellulase of the present invention are used each in such an amount that the ratio thereof to the cellulase of the present invention is in the range of 0.01 to 10, preferably 0.05 to 1.0, in terms of the amount of protein determined by Lowry's method.

Surfactants

In the present invention, the above-specified cellulases are used in combination with surfactants. By using a surfactant together with the cellulase, the amount of the cellulase to be used can be reduced while maintaining the enhancing effect of the cellulase on an agricultural chemical.

The surfactants to be used in combination with the above-mentioned specified cellulases are nonionic surfactants or cationic surfactants. They may be used singly, or in the form of a mixture comprising at least two of these surfactants.

Examples of the nonionic surfactants include polyoxyethylene alkyl ethers, polyoxyethylene alkylaryl ethers, polyoxyethylene alkylaryl ether/formaldehyde condensates, polyoxyalkylene aryl ethers, polyoxyalkylene alkyl esters, polyoxyalkylene alkyl-sorbltol esters, polyoxyalkylene sorbitan esters, polyoxyalkylene alkylglycerol esters, polyoxyalkylene block copolymers, polyoxyalkylene block copolymer/alkylglycerol esters, polyoxyalkylene alkylsulfonamides, polyoxyalkylene rosin esters, polyoxypropylene block copolymers, polyoxyethylene oleyl ethers, polyoxyalkylene alkylphenols, alkylglycosides, alkylpolyglycosides and polyoxyalkylene alkylpolyglycosides. They may be used singly, or in the form of a mixture comprising at least two of these surfactants.

Examples of the cationic surfactants include alkylamine/ethylene oxide adducts and alkylamine/propylene oxide adducts, e.g., tallow amine/ethylene oxide adduct, oleylamine/ethylene oxide adduct, soy amine/ethylene oxide adduct, amine derived from coconut oil fatty acid/ethylene oxide adduct, synthetic alkylamine/ethylene oxide adducts and octylamine/ethylene oxide adduct; and triethanolamine salts of polyoxyethylene fatty acids; and quaternary ammonium compounds derived from these compounds. They may be used singly, or in the form of a mixture comprising at least two of these surfactants.

Method for enhancing the efficacies of agricultural chemicals

The cellulase of the present invention having avicelase and CMCase activities and a unit ratio of the avicelase activity to the CMCase activity of at least 0.15 is applied to a locus which would benefit from such treatment, i.e., the application of the cellulase, together with or prior to the application of the agricultural chemical. Specifically, the cellulase and an agricultural chemical are applied to, for example, plants, cereals, vegetables, fruits, trees, fruit trees, grasses, weeds and seeds, and, at the same time, fungi, bacteria, insects, mites and acarids. In other words, the cellulase and an agricultural chemical are used in farms, plantations, orchards, gardens, lawns, woods and forests.

When the cellulase is used together with an agricultural chemical, the application of the cellulase is preferably conducted by using a mixture comprising the cellulase, the agricultural chemical and an aqueous medium. More specifically, a mixture prepared by adding the cellulase to a diluted solution of an agricultural chemical to be used for e. g., spraying is preferably used. In such a case, the amount of the cellulase in the mixture is preferably such that the cellulase activity (the total of the avicelase activity and the CMCase activity) is 0.01 to 10 units per gram of the mixture.

When the cellulase is used prior to the application of an agricultural chemical, the application of the cellulase is preferably conducted by using a mixture comprising the cellulase and an aqueous medium. In this case, the amount of the cellulase in the mixture is preferably such that the cellulase activity is 0.01 to 10 units per gram of the mixture. When the cellulase is used prior to the application of an agricultural chemical, an aqueous solution or the like of the cellulase is sprayed over a given site to decompose a protective or supporting ingredient of the target organism to some extent and then the agricultural chemical is sprayed thereon.

In conducting the method for enhancing the efficacy of an agricultural chemical according to the use of the present invention, an adjuvant composition for agricultural chemicals which will be described below is preferably used.

Adjuvant compositions for agricultural chemicals

The adjuvant compositions for agricultural chemicals to be used include (1) a composition comprising the above-described cellulase according to the present invention and an enzyme other than the cellulase and having a ratio of the enzyme other than the cellulase to the cellulase, in terms of protein determined by Lowry's method, of 0.01 to 10; (2) a composition comprising the above-described cellulase and the surfactant in such amounts that when the composition is diluted to a proper concentration with an aqueous medium in its use, the cellulase activity per gram of the diluted solution will be 0.01 to 10 units and the surfactant content will be 0.005 to 5% by weight, and (3) a composition comprising the above-described cellulase according to the present invention, an enzyme other than the cellulase and a surfactant in such amounts that when the composition is diluted to a proper concentration with an aqueous medium in its use, the cellulase activity per gram of the diluted solution will be 0.01 to 10 units, the surfactant content will be 0.005 to 5% by weight, and the ratio of the enzyme other than the cellulase to the cellulase, in terms of protein determined by Lowry's method, will be 0.01 to 10.

The adjuvant composition for agricultural chemicals to be used in the present invention exhibits a high enhancing effect particularly on herbicides. The highest enhancing effect is exhibited on glyphosate among the herbicides.

The adjuvant composition for agricultural chemicals can be used by any of a method wherein an-agricultural chemical composition containing all the ingredients of the adjuvant composition for agricultural chemicals is used; a method wherein the adjuvant composition for agricultural chemicals is added to an agricultural chemical composition which does not contain the adjuvant when the agricultural chemical composition is diluted; and a method wherein an aqueous solution or the like of the adjuvant composition for agricultural chemicals is applied to plants or the like prior to the application (by means of spraying or the like) of the agricultural chemical. The intended enhancing effect of the present invention can be exhibited by any of these methods.

Agricultural chemical compositions

The agricultural chemical composition of the present invention contains the cellulase in such a relative amount that when the composition is diluted to a proper agricultural chemical concentration (usually 0.01 to 1.0% by weight) with an aqueous medium, the diluted liquid has a cellulase concentration capable of enhancing the efficacy of the agricultural chemical. Namely, the agricultural chemical composition of the present invention contains an agricultural chemical and a cellulase in such a ratio that when the composition is diluted to such a dilution rate that a proper concentration of the agricultural chemical is obtained, the diluted liquid has a cellulase concentration sufficient for enhancing the efficacy of the agricultural chemical, though the proper concentration of the agricultural chemical in its use depends on the kind of the agricultural chemical. The agricultural chemical composition of the present invention contains a cellulase in such an amount that when the composition is diluted to a proper concentration of the agricultural chemical for use with an aqueous medium, the diluted liquid has a cellulase activity of preferably 0.01 to 10 units, still more preferably 0.03 to 5 units, and particularly preferably 0.1 to 3 units per gram thereof. When the cellulase activity per gram of the diluted liquid is below 0.01 unit, the enhancing effect is low and, on the contrary, even if it exceeds 10 units, it does not follow that there will be an improvement in the effect corresponding to the increase in the content.

The agricultural chemical composition of the present invention may further contain an enzyme other than the cellulase in such an amount that the ratio of this enzyme to the cellulase, in terms of protein determined by Lowry's method, is 0.01 to 10.

The agricultural chemical composition of the present invention contains a nonionic or cationic surfactant in such an amount that when the composition is diluted to a proper concentration of the agricultural chemical for use with an aqueous medium, the concentration of the surfactant will be 0.005 to 5% by weight, preferably 0.01 to 1% by weight, and still more preferably 0.01 to 0.1% by weight.

The agricultural chemical composition of the present invention is prepared in any form selected from among, for example, liquid preparations, emulsions, wettable powders, granules, dusts and flowables, the form being not limited. Therefore, the agricultural chemical composition of the present invention may contain other additives such as an emulsifier, a dispersant and/or a carrier depending on the formulation or the form thereof.

Such an agricultural chemical composition may further contain a chelating agent, a pH regulator, an inorganic salt, a thickener, a solvent, a humectant or a wetting agent, if necessary.

Examples of the chelating agents to be used in the agricultural chemical composition of the present invention include those based on aminopolycarboxylic acids, aromatic and aliphatic carboxylic acids, amino acids, ether polycarboxylic acids, phosphonic acids such as iminodimethylphosphonic acids (IDP) and alkyldiphosphonic acids (ADPA), hydroxycarboxylic acids and polyelectrolytes (including oligo-electrolytes); and dimethylglyoxime (DG). These chelating agents may be each in the form of a free acid or a salt such as a sodium salt, a potassium salt and an ammonium salt.

When the chelating agent is used, it must be selected so that it does not inhibit the cellulase activity. The chelating agent is used in such an amount that its amount in the agricultural chemical composition diluted to a proper agricultural chemical concentration for use will be about 10 to 1,000 ppm.

Examples of the pH regultors usable for the agricultural chemical composition of the present invention include citric acid, phosphoric acids (such as pyrophosphoric acid) and gluconic acid as well as salts thereof.

Examples of the inorganic salts usable for the agricultural chemical composition of the present invention include inorganic mineral salts such as clay, talc, bentonite, zeolite, calcium carbonate, diatomaceous earth and white carbon, and inorganic ammonium salts such as ammonium sulfate, ammonium nitrate, ammonium phosphate, ammonium thiocyanate, ammonium chloride and ammonium sulfamate.

Any of natural, semi-synthetic and synthetic water-soluble thickeners is usable for the agricultural chemical composition of the present invention. Examples of the natural mucilages include xanthan gum and Xanflood derived from microorganisms, and pectin, acacia and guar gum derived from vegetables. Examples of the semisynthetic mucilages include methylated, carboxyalkylated and hydroxyalkylated celluloses (such as methylcellulose, carboxymethylcellulose and hydroxymethylcellulose), methylated, carboxyalkylated and hydroxyalkylated starch derivatives, and sorbitol. Examples of the synthetic mucilages include polyacrylates, polymaleates, polyvinylpyrrolidone and pentaerythritol /ethylene oxide adducts.

Examples of the humectants and wetting agents usable for the agricultural chemical composition of the present invention include polyethylene glycol (degree of polymerization: 200 to 500,000), propylene glycol, polypropylene glycol, glycerol, calcium chloride, sodium sulfate, sodium acrylate, sodium polyacrylate, sodium lactate, dimethyl sulfoxide (DMSO), glucose, sorbitol, a composite of diethylene glycol monobutyl ether with lithium bromide, and polysaccharides. Preferred examples of them include glycerol, sodium polyacrylate, sodium lactate and polyethylene glycol (degree of polymerization: 200 to 500,000). The humectants and wetting agents usable herein are not limited to those described above.

Next, examples of the agricultural chemicals to be used in the agricultural chemical composition of the present invention will be cited, though the agricultural chemicals to be used in the present invention is not restricted thereto.

In the case of fungicides (or bactericides), included are Zineb [zinc ethylenebis(dithiocarbamate)], Maneb [manganese ethylenebis(dithiocarbamate)], Thiram [bis(dimethylthiocarbamoyl) disulfide], Mancozeb [complex of zinc and manganese ethylenebis(dithiocarbamate)], Polycarbamate [dizinc bis(dimethyldithiocarbamate) ethylenebis(dithiocarbamate)], Propineb [polymeric zinc propylenebis(dithiocarbamate)], benzimidazole fungicides such as Benomyl [methyl 1-(butylcarbamoyl)-2-benzimidazolecarbamate] and Thiophanate-methyl [1,2-bis(3-methoxycarbonyl-2-thioureido)benzene]; Vinclozolin [3-(3,5-dichlorophenyl)-5-methyl-5-vinyl-1,3-oxazolidine-2,4-dione], Iprodione [3-(3,5-dichlorophenyl)-N-isopropyl-2,4-dioxoimidazolidine-l-carboxamide], Procymidone [N-(3,5-dichlorophenyl)-1,2-dimethylcyclopropane-1,2-dicarboximide], Anilazine (Triazine) [2,4-dichloro-6-(2-chloroanilino)-1,3,5-triazine], Triflumizole [(E)-4-chloro-$\alpha,\alpha,\alpha$-trifluoro-N-(1-imidazol-1-yl-2-propoxyethylidene)toluidine], Metalaxyl [methyl N-(2-methoxyacetyl)-N-(2,6-xylyl)-DL-alaninate], Bitertanol [all-rac-1-(biphenyl-4-yl-oxy)-3,3-dimethyl-1-(1H-1,2,4-triazol-1-yl)-2-butan-2-ol], Pyrifenox [2',4'-dichloro-2-(3-pyridyl)acetophenone (EZ)-O-methyloxime], Fenarimol [2,4'-dichloro-$\alpha$-(pyridin-5-yl)benzhydryl alcohol], Triforine [1,4-bis-(2,2,2-trichloro-1-formamidoethyl)piperazine], Iminoctadine acetate [1,1'-iminiodi(octamethylene)-diguanidinium triacetate], organocopper compound (Oxine-copper [copper 8-quinolinolate]), antibiotic bactericides (streptomycin type, tetracycline type, polyoxins type, blasticidin S, kasugamycin type, validamycin type), Triadimefon [1-(4-chlorophenoxy)-3,3-dimethyl-1-(1,2,4-triazol-1-yl)-2-butanone], Isoprothiolane [diisopropyl 1,3-dithiolan-2-ylidenemalonate], Chlorothalonil (Daconil) [tetrachloroisophthalonitrile], Etridiazol (Pansoil) [5-ethoxy-3-trichloromethyl-1,2,4-thiadiazole], Fthalide [4,5,6,7-tetrachlorophthalide], Iprobenfos (Kitazin P) [0,0-diisopropyl-S-benzyl thiophosphate], Edifenphos (Hinosan) [O-ethyl S,S-diphenyl dithiophosphate], Probenazole [3-allyloxy-1,2-benzisothiazole-1,1-dioxide], Captan [N-trichloromethylthiotetrahydrophthalimide] and Fosetyl [aluminum tris (ethylphosphonate)].

In the case of insecticides, included are pyrethroid insecticides such as Fenvalerate [$\alpha$-cyano-3-phenoxybenzyl 2-(4-chlorophenyl)-3-methylbutanoate] and Cyfluthrin (Baythroid) [$\alpha$-cyano-4-fluoro-3-phenoxyphenylmethyl 3-(2,2-dichloroethenyl)-2,2-dimethylcyclcopropanecarboxylate]; organophosphorus insecticides such as Dichlorvos (DDVP) [dimethyl 2,2-dichlorovinyl phosphate], Fenitrothion (MEP) [O,O-dimethyl-0-(3-methyl-4-nitrophenyl)thiophosphate], Malathion (Malathon) [S-[1,2-bis(ethoxycarbonyl)ethyl]dimethyl phosphorothiol-thionate], Dimethoate [dimethyl S-(N-methylcarbamoylmethyl)-dithiophosphate], Phenthoate (Elsan) [S-[$\alpha$-(ethoxycarbonyl)benzyl]dimethyl phosphorothiol-thionate] and Fenthion (Baycid) [0,0-dimethyl-0-[3-methyl-4-(methylthio)phenyl]thiophosphate]; carbamate insecticides such as Fenobucarb (Bassa) [O-sec.-butylphenyl methylcarbamate], Metolcarb (MTMC) [m-tolyl methylcarbamate], Xylylcarb (Meobal) [3,4-dimethylphenyl N-methylcarbamate] and Carbaryl (NAC) [1-naphthyl N-methylcarbamate]; Methomyl [S-methyl N-(methylcarbamoyloxy)thioacetimidate] and Cartap [1,3-bis(carbamoylthio)-2-(N,N-dimethylamino)propane hydrochloride].

Further, in the case of natural insecticides, included are pyrethrin preparations and piperonyl butoxide preparations, which originate from <u>Chrysanthemum</u> <u>cinerariaefolium</u>, rotenone preparations, which originate from <u>Derris</u> which is a shrub of the pulse family, and nicotine preparations [containing 3-(1-methyl-2-pyrrolidinyl)pyridine sulfate]. In the case of insect growth regulators (IGR), included are diflubenzuron [1-(4-chlorophenyl)-3-(2,6-difluorobenzoyl) urea], teflubenzuron [1-(3,5-dichloro-2,4-difluorophenyl)-3-(2,6-difluorobenzoyl)urea], chlorofluazuron [1-[3,5-dichloro-4-(3-chloro-5-trifluoromethyl-2-pyridyloxy)phenyl]-3-(2,6-difluorobenzoyl)-urea], buprofezin [2-tert-butylimino-3-isopropyl-5-phenyl-3,4,5,6-tetrahydro-2H-1,3,5-thiadiazin-4-one] and fenoxycarb [ethyl 2-(4-phenoxyphenoxy)ethylcarbamate].

In the case of miticides (or acaricides), included are Pyridaben [2-tert.-butyl-5-(4-tert.-butylbenzylthio)-4-chloropyridazin-3(2H)-one], Acricid [2,4-dinitro-6-sec.-butylphenyldimethylacrylate], Chloromite [isopropyl 4,4-dichlorobenzylate], Chlorobenzilate (Akar) [ethyl 4,4'-dichlorobenzilate], Dicofol (Kelthane) [1,1-bis(p-chlorophenyl)-2,2,2-trichloroethanol], Benzoximate (Citrazon) [ethyl O-benzoyl-3-chloro-2,6-dimethoxybenzohydroximate], Propargite (Omite) [2-(p-tert.-butylphenoxy)cyclohexyl 2-propynyl sulfite], Fenbutatin Oxide (Osadan) [hexakis($\beta,\beta$-dimethylphenylethyl)distannoxane], Hexythiazox [trans-5-(4-chlorophenyl)-N-cyclohexyl-4-methyl-2-oxothiazolidine-3-carboxamide] and Amitraz [3-methyl-1,5-bis(2,4-xylyl)-1,3,5-triazapenta-1,4-diene].

In the case of herbicides, included are acid amide hebicides such as Propanil (DCPA) [3',4'-dichloropropionanilide] and Alachlor [2-chloro-2',6'-diethyl-N-(methoxyethyl)acetanilide]; urea herbicides such as Diuron (DCMU) [3-(3,4-dichlorophenyl)-1,1-dimethylurea] and Linuron [3-(3,4-dichlorophenyl)-1-methoxy-1-methylurea]; dipyridyl herbicides such as Paraquat Dichloride (Paraquat) [1,1'-dimethyl-4,4'-bipyridirium dichloride] and Diquat Dibromide (Diquat) [6,7-dihydrodipyrido[1,2-a:2',1'-c]pyrazindiium dibromide]; diazine herbicides such as Bromacil [5-bromo-3-sec.-butyl-6-methyluracil]; S-triazine herbicides such as Simazine [2-chloro-4,6-bis(ethylamino)-1,3,5-triazine] and Simetryn [2,4-bis(ethylamino)-6-methylthio-1,3,5-triazine]; nitrile herbicides such as Dichlobeni (DBN) [2,6-dichlorobenzonitrile]; dinitroaniline herbicides such as Trifluralin [$\alpha,\alpha,\alpha$-trifluoro-2,6-dinitro-N,N-dipropyl-p-toluidine]; carbamate herbicides such as Benthiocarb [S-p-chlorobenzyl diethylthiocarbamate] and MCC [methyl 3,4-dichlorocarbanilate]; diphenylether herbicides such as Nitrofen (NIP) [2,4-dichlorophenyl-p-nitrophenylether]; phenol herbicides such as PCP [pentachlorophenol]; benzoic acid herbicides such as Dicamba (MDBA) [3,6-dichloro-2-methoxybenzoic acid dimethylamine salt]; phenoxy herbicides such as 2,4-D [2,4-dichlorophenoxyacetic acid and salts (sodium, amine and ethylether) thereof], and Mapica (MCPCA) [2'-chloro-2-(4-chloro-o-tolyloxy)acetanilide]; organophosphorus herbicides such as Glyphosate [N-(phosphonomethyl)glycine or a salt thereof], Bialaphos [sodium salt of L-2-amino-4-[(hydroxy)(methyl)-phosphinoyl] butyryl-L-alanyl-L-alanine] and Glufosinate [ammonium DL-homoalanin-4-yl (methyl)-phosphinate], and aliphatic herbicides such as TCA [trichloroacetic acid or a salt thereof].

Among these herbicides, organophosphorus herbicides are preferred, and Bialaphos [sodium salt of L-2-amino-4-[(hydroxy)(methyl)-phosphinoyl]-butyryl-L-alanyl-L-alanine], Glufosinate [ammonium DL-homoalanin-4-yl (methyl)phosphinate] and Glyphosate [N-(phosphonomethyl)glycine or a salt thereof] are particularly preferred.

In the case of plant growth regulators, included are MH (maleic hydrazide), Ethephon [2-chloroethylphosphonic acid], UASTA and Bialaphos.

The agricultural chemical composition of the present invention may further contain one or more ingredients such as plant growth regulators other than those cited above, fertilizers and preservatives.

The agricultural chemical composition of the present invention is used in order to control fungi (or bacteria), insects, mites (or acarids) and herbs or to regulate the growth of plants.

The agricultural chemical composition of the present invention is obtained in, for example, any of the following forms:

(a) all the ingredients are contained in one and the same vessel,

(b) the above-described cellulase (or a mixture thereof with an enzyme other than the cellulase) is contained in a vessel, and a composition comprising the components other than the enzyme(s) and containing an agricultural chemical are contained in another vessel, and

(c) the above-described cellulase (or a mixture thereof with an enzyme other than the cellulase) is contained in a vessel, the surfactant is contained in another vessel, and a composition comprising the components other than the enzyme(s) and surfactant and containing an agricultural chemical are contained in still another vessel.

The form of each of the contents of the vessels is not particularly limited, and is suitably selected depending on the use and purpose thereof. The material of the vessel is not particularly limited so far as it does not react with the contents or it does not adversely affect the contents. Examples of the materials include plastics, glasses and foils.

Examples

The present invention will now be described in more detail by referring to the following Examples which should not be thought to limit the scope of the present invention.

Example 1

Various liquid enzyme preparations (adjuvant compositions for agricultural chemicals) listed in Tables 3a and 3b were prepared by using enzymes listed in Table 1. The cellulase activities of the enzymes listed in Table 1 are given in Table 2.

Table 1

| Enzyme No. | Enzyme name (trade name) | Origin (source) | Manufacturer |
|---|---|---|---|
| (a) | Cellulase 30 L | Trichoderma sp. | Meiji Seika Kaisha Ltd. |
| (b) | Cellulase TP-60 | Trichoderma sp. | Meiji Sekika Kaisha Ltd. |
| (c) | Cellulase | Asp. niger | Tokyo Kasei Kogyo K.K. |
| (d) | Driselase | Irpex lacteus | Kyowa Hakko Kogyo Co., Ltd. |
| (e) | Cellulase Nagase | Asp. niger | Nagase & Co., Ltd. |

Table 2

| Enzyme No. | Cellulase activity | | | |
|---|---|---|---|---|
| | (A) CMCase activity (Units*) | (B) avicelase activity (Units*) | (A)/(B) | (A)+(B) (Units*) |
| (a) | 361 | 102 | 1/0.28 | 463 |

*: enzyme activity determined with 1 g of the enzyme.

Table 2   (continued)

| Enzyme No. | Cellulase activity | | | |
|---|---|---|---|---|
| | (A) CMCase activity (Units*) | (B) avicelase activity (Units*) | (A)/(B) | (A)+(B) (Units*) |
| (b) | 1244 | 383 | 1/0.31 | 1627 |
| (c) | 794 | 149 | 1/0.19 | 943 |
| (d) | 844 | 59 | 1/0.07 | 903 |
| (e) | 367 | 0 | 1/0 | 367 |

*: enzyme activity determined with 1 g of the enzyme.

Liquid enzyme preparation

1) Liquid enzyme preparations listed in Table 3a

Each of the enzymes (a) to (e) was taken in such an amount that the total of the CMCase activity and the avicelase activity of the enzyme contained in 1 g of the liquid enzyme preparation which would be prepared would be 3.0 units [for example, the enzyme (a,) was taken in an amount of 1/154 g per gram of the liquid enzyme preparation], and dissolved in distilled water. A liquid enzyme preparation containing a surfactant was prepared by diluting the liquid enzyme preparation, of which the total of the CMCase activity and the avicelase activity was 3.0 units per gram of the liquid enzyme preparation, with distilled water. In the dilution, the surfactant listed in Table 3a was added to the liquid enzyme preparation in such an amount that the final concentration of the surfactant would be 0.03% by weight.

2) Liquid enzyme preparations listed in Table 3b

Liquid enzyme preparation Nos. (9) and (10) were prepared in the same manner as the one described in the above item 1). Liquid enzyme preparation No. (11) was prepared by diluting the liquid enzyme preparation No. (1) (Reference example) prepared in the above item 1) with distilled water. In the dilution, other enzyme (cutinase ) was added to the liquid enzyme preparation No. (1) in such an amount that the amount of the other enzyme would be the same as that of enzyme (a) in terms of protein determined by Lowry's method. In the case of the liquid enzyme preparation No. (11), the surfactant listed in Table 3b was further added to the liquid enzyme preparation No. (1) in such an amount that the final concentration of the surfactant would be 0.03% by weight in the dilution of the liquid enzyme preparation No. (1).

Table 3a

| | Liq. enzyme prepn. No. | Composition | |
|---|---|---|---|
| Reference product | (1) | enzyme (a) | 3.0 Units* |
| Invention product | (2) | enzyme (a) | 2.5 Units* |
| | | POE(8)** oleyl ether | 0.03 wt.% |
| | (4) | enzyme (b) | 2.5 Units* |
| | | POE(8)** oleyl ether | 0.03 wt.% |
| | (6) | enzyme (c) | 2.5 Units* |
| | | POE(8)** oleyl ether | 0.03 wt.% |

Notes)
*: enzyme activity determined with 1 g of the liquid enzyme preparation.
**: "POE(8)" indicates poly(8)oxyethylene (namely, the average number of moles of ethylene oxide added is 8).

Table 3a   (continued)

|  | Liq. enzyme prepn. No. | Composition | |
|---|---|---|---|
| Comp. product | (7) | enzyme (d) | 3.0 Units* |
|  | (8) | enzyme (d) | 2.5 Units* |
|  |  | POE(8)** oleyl ether | 0.03 wt.% |
|  | (9) | enzyme (e) | 3.0 Units* |
|  | (10) | enzyme (e) | 2.5 Units* |
|  |  | POE(8)** oleyl ether | 0.03 wt.% |

Notes)

*: enzyme activity determined with 1 g of the liquid enzyme preparation.

**: "POE(8)" indicates poly(8)oxyethylene (namely, the average number of moles of ethylene oxide added is 8).

Table 3b

|  | Liq. enzyme prepn. No. | Composition | |
|---|---|---|---|
| Invention product | (9) | enzyme (a) | 2.0 Units* |
|  |  | POE(17.5)** hardened palm oil fatty acid ester of glycerol | 0.03 wt.% |
|  | (10) | enzyme (b) | 2.0 Units* |
|  |  | triethanolamine salt of POE(15)*** hardened beef tallow fatty acid | 0.03 wt.% |
|  | (11) | enzyme (a) | 1.5 Units* |
|  |  | cutinase (Collethotrichum lagenarium) |  |
|  |  | the same amt. as that of enzyme (a) in terms of protein determined by Lowry's method |  |
|  |  | POE(20)**** coconut oil fatty acid ester of glycerol | 0.03 wt.% |

Notes)

*: enzyme activity determined with 1 g of the liquid enzyme preparation.

**: "POE(17.5)" indicates poly(17.5)oxyethylene (namely, the average number of moles of ethylene oxide added is 17.5).

***: "POE(15)" indicates poly(15)oxyethylene (namely, the average number of moles of ethylene oxide added is 15).

****: "POE(20)" indicates poly(20)oxyethylene (namely, the average number of moles of ethylene oxide added is 20).

Commercially available herbicides, i.e., Roundup® liquid formulation (containing 41% by weight of isopropylamine salt of glyphosate as the active ingredient), Karmex® D wettable powder (containing 78.5% by weight of DCMU as the active ingredient), Herbiace® water-soluble powder (containing 20% by weight of bialaphos as the active ingredient) were each diluted 800-fold with each of the liquid enzyme preparations listed in Tables 3a and 3b. Thus, three kinds of agricultural chemical composition were prepared from each liquid enzyme preparation.

Fertile soil from a paddy field, gravel (i.e., river sand) and a commercially available compost were mixed together at a weight ratio of 7 : 2 : 1. The obtained mixture was put in pots each having an inner diameter of 12 cm. In order to conduct a greenhouse test, seeds of crabgrass were planted in the pots and germinated. The pots wherein the growth of crabgrass was abnormal were excluded in order to lower the nonuniformity among the pots. When the height of crabgrass reached about 18 cm, the resulting pots were used in the following test. The crabgrass of each pot was homogeneously sprayed with each of the above agricultural chemical compositions by the use of a spray gun (mfd. by Iwata Air Compressor Mfg. Co., Ltd., RG type) in a dose of 1000 ℓ/ha (liter/hectare) to evaluate the herbicidal efficacy of the agricultural chemical composition.

Ten days after the spraying, the above-ground part of the fresh plant was weighed and the result was expressed in a herbicidal ratio on the basis of the fresh weight of the above-ground part in the untreated lot (see the following formula).

$$\text{Herbicidal ratio (\%)} = \frac{\begin{array}{c}\text{above-ground}\\\text{fresh weight}\\\text{(g) of an}\\\text{untreated lot}\end{array} - \begin{array}{c}\text{above-ground}\\\text{fresh weight}\\\text{(g) of a}\\\text{test lot}\end{array}}{\begin{array}{c}\text{above-ground fresh weight}\\\text{(g) of an untreated lot}\end{array}} \times 100$$

The herbicidal ratios of the agricultural chemical compositions are given in Table 4.

## Table 4

| | No. of Liquid enzyme preparation | Herbicidal ratio (%) | | |
|---|---|---|---|---|
| | | Karmex D wettable powder | Herbiace water-sol. powder | Roundup liquid formulation |
| Reference product | (1) | 80.2 | 84.2 | 92.0 |
| Invention product | (2) | 76.4 | 82.0 | 90.0 |
| | (3) | 78.4 | 80.5 | 87.6 |
| | (4) | 70.6 | 70.2 | 82.0 |
| | (9) | 78.4 | 83.0 | 91.0 |
| | (10) | 80.6 | 82.2 | 90.6 |
| | (11) | 81.2 | 85.8 | 92.0 |
| Comp. product | (5) | 50.6 | 58.4 | 62.4 |
| | (6) | 50.0 | 54.3 | 56.2 |
| | (7) | 42.0 | 50.0 | 54.3 |
| | (8) | 43.6 | 50.0 | 52.8 |
| Added none | | 40.0 | 40.6 | 42.4 |

Example 2

Female imagines of Tetranychus kanzawai kishida were planted onto kidney bean leaf disks at a ratio of 30 imagines per lot on three runs and then incubated at 25°C for 24 hours. Subsequently, the whole leaf disks were dipped in a test solution for 5 seconds. After taking out of the test solution and allowing to stand at 25°C for 48 hours, the leaf disks were observed and the miticidal ratios were determined on the basis of the result in the untreated lot (refer to the following equation).

$$\text{Miticidal ratio (\%)} = \frac{\begin{array}{l}\text{the number of}\\\text{living mites of}\\\text{an untreated lot}\end{array} - \begin{array}{l}\text{the number of}\\\text{living mites}\\\text{of a test lot}\end{array}}{\begin{array}{l}\text{the number of living mites of}\\\text{an untreated lot}\end{array}} \times 100$$

As miticides, Nissorun V emulsion (containing 5% by weight of hexythiazox and 50% by weight of DDVP as the active ingredients) and Osadan wettable powder 25 (containing 25% by weight of phenbutatin oxide as the active ingredient) were each diluted 5,000-fold with the use of each of the liquid enzyme preparations (adjuvant compositions for agricultural chemicals) employed in Example 1, and the dilutions thus obtained each were used. Further, the above procedure was repeated without using any adjuvant composition.

Table 5 shows the results.

Table 5

| | No. of Liquid enzyme preparation | Miticidal ratio (%) | |
| --- | --- | --- | --- |
| | | Nissolan V emulsion | Osadan wettable powder 25 |
| Reference product | (1) | 58.9 | 68.9 |
| Invention product | (2) | 57.8 | 72.2 |
| | (3) | 55.6 | 66.7 |
| | (4) | 53.3 | 63.3 |
| | (9) | 57.8 | 66.7 |
| | (10) | 57.8 | 68.9 |
| | (11) | 55.6 | 61.1 |
| Comp. product | (5) | 44.4 | 47.8 |
| | (6) | 44.4 | 44.4 |
| | (7) | 42.2 | 44.0 |
| | (8) | 43.3 | 50.0 |
| Added none | | 33.3 | 38.9 |

Example 3

Rice planthopper larvae of the third instar were incubated and used in an efficacy test on insecticides in triplicate runs by the dipping method (each lot having 10 larvae). The insecticidal ratio was determined in the same manner as the one employed for the determination of the miticidal ratio.

Commercially available insecticides, i.e., Sumithion emulsion (containing 50% by weight of MEP as the active ingredient) and Malathon emulsion (containing 50% by weight of malathon as the active ingredient) were each diluted 5,000-fold with the use of each of the liquid enzyme preparations (adjuvant compositions for agricultural chemicals) employed in Example 1, and the dilutions thus obtained were each used.

Table 6 shows the results.

## Table 6

| | No. of Liquid enzyme preparation | Sumithion emulsion | | Malathon emulsion | |
|---|---|---|---|---|---|
| | | Number of dead insects | Insecticidal ratio (%) | Number of dead insects | Insecticidal ratio (%) |
| Ref. product | (1) | 27 | 90.0 | 27 | 90.0 |
| Inv. product | (2) | 25 | 83.3 | 26 | 86.7 |
| | (3) | 24 | 80.0 | 25 | 83.3 |
| | (4) | 19 | 63.3 | 22 | 73.3 |
| | (9) | 25 | 83.3 | 26 | 86.7 |
| | (10) | 26 | 86.7 | 26 | 86.7 |
| | (11) | 25 | 83.3 | 27 | 90.0 |
| Comp. product | (5) | 16 | 53.3 | 17 | 56.7 |
| | (6) | 15 | 50.0 | 15 | 50.0 |
| | (7) | 13 | 43.3 | 14 | 46.7 |
| | (8) | 14 | 46.7 | 14 | 46.7 |
| Added none | | 12 | 40.0 | 13 | 43.3 |

Example 4

A spore suspension ($10^7$/ml) of cucumber <u>Botrytis cinerea</u> acquiring the resistance against fungicides was applied to young cucumber seedlings at the trifoliate stage in a dose of 10 ml per pot and the resulting seedlings were allowed to stand at 25°C under a relative humidity of 90% for one day.

Then, a commercially available fungicide, i.e., Benlate wettable powder (containing 50% by weight of benomyl as the active ingredient) was diluted 5,000-fold with the use of each of the liquid enzyme preparations (adjuvant compositions for agricultural chemicals) employed in Example 1. The dilutions thus prepared were each applied to the seedlings in a dose of 5 ml per pot. After allowing the pots to stand at 25°C under a relative humidity of 85%, lesions were counted and the preventive value was calculated in accordance with the following equation.

The results are given in Table 7.

$$\text{preventive value} = \left| 1 - \frac{\text{no. of lesions of a test lot}}{\text{no. of lesion of an untreated lot}} \right| \times 100$$

## Table 7

| | No. of Liquid enzyme preparation | Benlate wettable powder |
|---|---|---|
| | | Preventive value |
| Reference product | (1) | 94.0 |
| Inv. product | (2) | 88.6 |
| | (3) | 82.3 |
| | (4) | 75.0 |
| | (9) | 92.0 |
| | (10) | 91.6 |
| | (11) | 91.8 |
| Comp. product | (5) | 62.5 |
| | (6) | 60.0 |
| | (7) | 58.0 |
| | (8) | 57.5 |
| Added none | | 53.5 |

## Claims

1. Use of an adjuvant composition comprising:

   a cellulase having an avicelase activity and a CMCase activity and a unit ratio of the avicelase activity to the CMCase activity of at least 0.15 and
   a non-ionic surfactant or a cationic surfactant as an enhancer for an agricultural chemical.

2. The use as claimed in claim 1, in which the amount of the cellulase and surfactant are such that when the composition is diluted to a proper concentration for use with an aqueous medium, the total of the avicelase activity and the CMCase activity per gram of the diluted liquid will be 0.01 to 10 units and the amount of the surfactant will be 0.005 to 5% by weight.

3. The use as claimed in claim 1, in which the agricultural chemical is a fungicide, an insecticide, a miticide, a herbicide or a plant growth regulator.

4. The use as claimed in claim 1, in which the agricultural chemical is N-(phosphonomethyl)glycine or a salt thereof.

5. The use as claimed in claim 1, in which the unit ratio of the avicelase activity to the CMCase activity is 0.15 to 1.0.

6. The use as claimed in any of claims 1 to 5, wherein the cellulase is used in combination with an enzyme other than cellulase.

7. The use as claimed in claim 6, wherein the enzyme other than the cellulase is an esterase.

8. The use as claimed in claim 7, wherein the esterase is at least one of lipase and cutinase.

9. The use as claimed in any of claims 6 to 8, wherein the ratio of the enzyme other than cellulase to the cellulase, in terms of protein determined by Lowry's method, is 0.01 to 10.

10. The use as claimed in any of claims 1 to 9, in which the composition is applied to a locus which would benefit from such treatment prior to the application of the agricultural chemical.

11. An agricultural chemical composition which comprises:

    an agricultural chemical,
    a cellulase having an avicelase activity and a CMCase activity and a unit ratio of the avicelase activity to the CMCase activity of at least 0.15 and
    a non-ionic surfactant or a cationic surfactant.

12. The agricultural chemical composition as claimed in claim 11, in which the amount of the cellulase and surfactant are such that when the composition is diluted to a proper concentration for use with an aqueous medium, the total of the avicelase activity and the CMCase activity per gram of the diluted liquid will be 0.01 to 10 units and the amount of the surfactant will be 0.005 to 5% by weight.

13. The agricultural chemical composition as claimed in claim 11, in which the agricultural chemical is a fungicide, an insecticide, a miticide, a herbicide or a plant growth regulator.

14. The agricultural chemical composition as claimed in claim 11, in which the agricultural chemical is N-(phosphonomethyl)glycine or a salt thereof.

15. The agricultural chemical composition as claimed in claim 11, in which the unit ratio of the avicelase activity to the CMCase activity is 0.15 to 1.0.

16. The agricultural composition as claimed in any of claims 11 to 15, wherein the cellulase is used in combination with an enzyme other than cellulase.

17. The agricultural composition as claimed in claim 16, wherein the enzyme other than the cellulase is an esterase.

18. The agricultural composition as claimed in claim 17, wherein the esterase is at least one of lipase and cutinase.

19. The agricultural composition as claimed in any of claims 16 to 18, wherein the ratio of the enzyme other than cellulase to the cellulase, in terms of protein determined by Lowry's method, is 0.01 to 10.

**Patentansprüche**

1. Verwendung einer Hilfsstoffzusammensetzung, umfassend:

    eine Cellulase mit Avicelase-Aktivität und CMCase-Aktivität und einem Einheitsverhältnis der Avicelase-Aktivität zur CMCase-Aktivität von mindestens 0,15 und

    ein nichtionisches Tensid oder kationisches Tensid,

    als Verstärkungsmittel für eine Agrochemikalie.

2. Verwendung gemäß Anspruch 1, worin die Menge der Cellulase und des Tensids so sind, daß, wenn die Zusammensetzung auf eine geeignete Konzentration zur Verwendung mit einem wäßrigen Medium verdünnt wird, die Gesamtheit der Avicelase-Aktivität und der CMCase-Aktivität pro Gramm der verdünnten Flüssigkeit 0,01 bis 10 Einheiten beträgt und die Menge des Tensids 0,005 bis 5 Gew.-% beträgt.

3. Verwendung gemäß Anspruch 1, worin die Agrochemikalie ein Fungizid, ein Insektizid, ein Mitizid, ein Herbizid oder ein Pflanzenwachstumsregulator ist.

**4.** Verwendung gemäß Anspruch 1, worin die Agrochemikalie N-(Phosphonomethyl)glycin oder ein Salz davon ist.

**5.** Verwendung gemäß Anspruch 1, worin das Einheitsverhältnis der Avicelase-Aktivität zur CMCase-Aktivität 0,15 bis 1,0 beträgt.

**6.** Verwendung gemäß einem der Ansprüche 1 bis 5, worin die Cellulase in Kombination mit einem anderen Enzym als Cellulase verwendet wird.

**7.** Verwendung gemäß Anspruch 6, worin das andere Enzym als Cellulase eine Esterase ist.

**8.** Verwendung gemäß Anspruch 7, worin die Esterase mindestens eine unter Lipase und Cutinase ist.

**9.** Verwendung gemäß einem der Ansprüche 6 bis 8, worin das Verhältnis des sich von der Cellulase unterscheidenden Enzyms zur Cellulase, bezüglich des nach Lowry's Verfahren bestimmten Proteins, 0,01 bis 10 beträgt.

**10.** Verwendung gemäß einem der Ansprüche 1 bis 9, worin die Zusammensetzung auf eine Stelle aufgebracht wird, die von dieser Behandlung vor dem Aufbringen der Agrochemikalie profitiert.

**11.** Agrochemikalienzusammensetzung, welche umfaßt:

eine Agrochemikalie,

eine Cellulase mit Avicelase-Aktivität und CMCase-Aktivität und einem Einheitsverhältnis der Avicelase-Aktivität zur CMCase-Aktivität von mindestens 0,15 und

ein nicht-ionisches Tensid oder kationisches Tensid.

**12.** Agrochemikalienzusammensetzung gemäß Anspruch 11, worin die Menge der Cellulase und des Tensids so sind, daß, wenn die Zusammensetzung auf eine geeignete Konzentration zur Verwendung mit einem wäßrigen Medium verdünnt wird, die Gesamtheit der Avicelase-Aktivität und der CMCase-Aktivität pro Gramm der verdünnten Flüssigkeit 0,01 bis 10 Einheiten beträgt und die Menge des Tensids 0,005 bis 5 Gew.-% beträgt.

**13.** Agrochemikalienzusammensetzung gemäß Anspruch 11, worin die Agrochemikalie ein Fungizid, ein Insektizid, ein Mitizid, ein Herbizid oder ein Pflanzenwachstumsregulator ist.

**14.** Agrochemikalienzusammensetzung gemäß Anspruch 11, worin die Agrochemikalie N-(Phosphonomethyl)glycin oder ein Salz davon ist.

**15.** Agrochemikalienzusammensetzung gemäß Anspruch 11, worin das Einheitsverhältnis der Avicelase-Aktivität zur CMCase-Aktivität 0,15 bis 1,0 beträgt.

**16.** Agrochemikalienzusämmensetzung gemäß einem der Ansprüche 11 bis 15 , worin die Cellulase in Kombination mit einem anderen Enzym als Cellulase verwendet wird.

**17.** Agrochemikalienzusammensetzung gemäß Anspruch 16, worin das andere Enzym als Cellulase eine Esterase ist.

**18.** Agrochemikalienzusammensetzung gemäß Anspruch 17, worin die Esterase mindestens eine unter Lipase und Cutinase ist.

**19.** Agrochemikalienzusammensetzung gemäß einem der Ansprüche 16 bis 18 , worin das Verhältnis des sich von der Cellulase unterscheidenden Enzyms zur Cellulase, bezüglich des nach Lowry's Verfahren bestimmten Proteins, 0,01 bis 10 beträgt.

**Revendications**

**1.** Utilisation d'une composition d'adjuvants comprenant :

une cellulase ayant une activité avicelase et une activité CMCase et un rapport unitaire de l'activité avicelase à l'activité CMCase d'au moins 0,15 et

un agent tensioactif non ionique ou un agent tensioactif cationique comme améliorateur d'un produit chimique agricole.

2. Utilisation selon la revendication 1, dans laquelle la quantité de la cellulase et de l'agent tensioactif sont telles que, lorsque la composition est diluée à une concentration adéquate pour utilisation avec un milieu aqueux, le total de l'activité avicelase et de l'activité CMCase par gramme du liquide dilué sera de 0,01 à 10 unités et la quantité de l'agent tensioactif sera de 0,005 à 5 % en poids.

3. Utilisation selon la revendication 1, dans laquelle le produit chimique agricole est un fongicide, un insecticide, un miticide, un herbicide ou un régulateur de la croissance de plante.

4. Utilisation selon la revendication 1, dans laquelle le produit chimique agricole est la N-(phosphonométhyl)glycine ou l'un de ses sels.

5. Utilisation selon la revendication 1, dans laquelle le rapport unitaire entre l'activité avicelase et l'activité CMCase est de 0,15 à 1,0.

6. Utilisation selon l'une quelconque des revendications 1 à 5, dans laquelle la cellulase est utilisée en combinaison avec une enzyme autre que la cellulase.

7. Utilisation selon la revendication 6, dans laquelle l'enzyme autre que la cellulase est une estérase.

8. Utilisation selon la revendication 7, dans laquelle l'estérase est au moins l'une de la lipase et de la cutinase.

9. Utilisation selon l'une quelconque des revendications 6 à 8, dans laquelle le rapport entre l'enzyme autre que la cellulase et la cellulase, en terme de protéine déterminé par la méthode de Lowry, est de 0,01 à 10.

10. Utilisation selon l'une quelconque des revendications 1 à 9, dans laquelle la composition est appliquée à un lieu qui profiterait d'un tel traitement préalablement à l'application du produit chimique agricole.

11. Composition chimique agricole qui comprend :

un produit chimique agricole,
une cellulase ayant une activité avicelase et une activité CMCase et un rapport unitaire entre l'activité avicelase et l'activité CMCase d'au moins 0,15 et
un agent tensioactif non ionique ou un agent tensioactif cationique.

12. Composition chimique agricole selon la revendication 11, dans laquelle la quantité de la cellu-lase et de l'agent tensioactif est telle que, lorsque la composition est diluée à une concentration adéquate pour utilisation avec un milieu aqueux, le total de l'activité avicelase et de l'activité CMCase par gramme du liquide dilué sera de 0,01 à 10 unités et que la quantité de l'agent tensioactif sera de 0,005 à 5 % en poids.

13. Composition chimique agricole selon la revendication 11, dans laquelle le produit chimique agricole est un fongicide, un insecticide, un miticide, un herbicide ou un régulateur de la croissance de plante.

14. Composition chimique agricole selon la revendication 11, dans laquelle le produit chimique agricole est la N-(phosphonométhyl)glycine ou l'un de ses sels.

15. Composition chimique agricole selon la revendication 11, dans laquelle le rapport unitaire entre l'activité avicelase et l'activité CMCase est de 0,15 à 1,0.

16. Composition agricole selon l'une quelconque des revendications 11 à 15, dans laquelle la cellulase est utilisée en combinaison avec une enzyme autre que la cellulase.

17. Composition agricole selon la revendication 16, dans laquelle l'enzyme autre que la cellulase est une estérase.

18. Composition agricole selon la revendication 17, dans laquelle l'estérase est au moins l'une de la lipase et de la cutinase.

19. Composition agricole selon l'une quelconque des revendications 16 à 18, dans laquelle le rapport entre l'enzyme autre que la cellulase et la cellulase, en terme de protéine déterminé par la méthode de Lowry est de 0,01 à 10.